# EUROPEAN PATENT SPECIFICATION

(11) **EP 3 844 043 B1**
(45) Date of publication and mention of the grant of the patent: **12.10.2022**
(21) Application number: 19762230.1
(22) Date of filing: 29.08.2019
(51) Int. Cl.: B61B 11/00, A63B 69/12

(54) **WATER TRANSPORT SYSTEM AND SWIMMING POOL PROVIDED WITH SUCH A TRANSPORT SYSTEM**
WASSERTRANSPORTSYSTEM UND SCHWIMMBECKEN MIT EINEM SOLCHEN TRANSPORTSYSTEM
SYSTÈME DE TRANSPORT D'EAU ET PISCINE ÉQUIPÉE D'UN TEL SYSTÈME DE TRANSPORT

(30) Priority: 29.08.2018 IT 201800008229
(43) Date of publication of application: 07.07.2021
(73) Proprietor: Swim Lift S.r.l., 20148 Milano (IT)
(72) Inventor: STEFFANO, Achille Angelo Luigi, 20148 Milano (IT)
(74) Representative: Savini, Stefania
(86) International application number: PCT/IB2019/057270
(87) International publication number: WO 2020/044273

(56) References cited:
- FR-A1- 2 671 777
- GB-A- 2 381 203
- JP-U- S6 028 566
- US-A- 1 546 031
- US-A- 3 338 180
- US-A- 4 353 307

## Description

The invention relates to a water transport system for transporting and/or supporting persons and/or objects on a preset path in water.

In particular, the invention relates to a transport system of the cable type intended to tow a bather on a loop path defined by the cable (or other similar transmitting member) in water.

The invention further relates to a swimming pool provided with a water transport system according to the invention.

From the prior art, cable transport systems are known comprising a motion transmitting element such as a cable, wound in a loop around a pair of pulleys, one drive pulley and one driven pulley, respectively arranged in a towing station and in a transit station of the cable transport system, the transit station being located in water, for example in the sea at a certain distance from the shore line or in a stretch of water such as a lake at a certain distance from the shores of the lake. The drive pulley and the driven pulley are mounted in such a manner that the cable is suspended in the air far from the water. Cable transport systems of known type comprise a plurality of long towing ropes secured to the cable and hanging from the latter to be able to be grasped by one or more bathers, in particular by surfers. In use, the cable is driven by a motor associated with the drive pulley and enables the surfers to be towed, along with their surf boards, along the loop path between the towing station and the transit station, and vice versa, to be able to be taken away, i.e. far from the shore line or shores of the stretch of water and disconnect in order to be able to engage in surfing or be able to be taken to the shore line at the end of a sports session.

One drawback of cable transport systems with cable suspended in the air of the type disclosed above is that the towing ropes that hang from the cable can be easily shifted by the wind. This makes it difficult for a bather to grasp the towing rope or the towing rope may even be unreachable by the bather because it is shifted by the wind to a height above that of the extent of an upper limb of the bather. Further, trying to reach the towing rope entails a significant expenditure of energy by the bather.

From the prior art, cable transport systems are further known that are similar to those disclosed above but which differ therefrom by the fact that the motion transmitting element is a cable immersed below water, in particular, the weight of the cable maintains the cable on the bottom of the sea or of the stretch of water. Each towing rope is secured at one end to the cable that runs along the bottom of the sea or the stretch of water and at the other end to a float to which a tag line is turn connected that is arranged for being able to be grasped by a bather. Also in this case, in use, the cable is moved by driving a motor associated with the drive pulley and enables bathers to be towed along the loop path between the towing station and the transit station, and vice versa.

One drawback of cable transport systems with the cable immersed in water of the type disclosed above is that the towing ropes, and accordingly the float and the tag line connected thereto, can be easily shifted by wave movement. Also in this case, this can make it difficult for a bather to grasp the tag line that moves continuously dragged by the wave movement and thus has to be pursued by the swimming bather. Consequently, also in this case, the bather expends considerable energy to reach and grasp the tag line.

JP S60 28566 U discloses a water transport system for swimmers comprising a start station and an arrival station that float on the water and are mounted on support columns installed vertically on the bottom of the sea, the start station and the arrival station being connected by a rope that winds around the stations to define a loop path. The rope is located near the surface of the water and hooks are connected thereto that are graspable by a swimmer so that the swimmer can be towed by the water transport system between the start station and the arrival station.

GB 2 381 203 A discloses a cable towing system for towing swimmers or surfers in the sea, comprising a towing cable so wound as to define a closed loop around a pulley fixed to the bottom of the sea by an anchor, around another pulley fixed to a buoy floating on the surface of the sea and around a drive pulley of a motor anchored on a beach by pegs and line and arranged for moving the towing cable.

From the prior art, swimming pools are known that are provided with floating dividing lanes comprising a plurality of elongated cylindrical elements, which are axially connected by a flexible element such as a cord, and wound by an outer wave-breaking structure, such dividing lanes having ends attached to opposite edges of the swimming pool. The dividing lanes of pools of known type do not allow bathers to be towed along a set path.

One object of the invention is to improve cable transport systems in water of known type.

Another object of the invention is to provide a cable transport system in water which a bather can easily hold onto.

A further object of the invention is to provide a cable transport system in water that provides simple, fast and cheap installation and removal.

A still further object of the invention is to provide a safe cable transport system in water, i.e. that does not place the user using the system in hazardous or risky conditions.

Yet another object of the invention is to improve swimming pools of known type, by providing a swimming pool provided with a cable transport system in water according to the invention.

The aforesaid objects and also others are achieved by a transport system of the cable in water type according to one or more of the claims set out below.

Owing to the invention it is possible to make a transport system of the cable in water type that is easily graspable by a bather, in particular by a child, an old person and/or a disabled person and does not involve expenditure of energy by the bather taking hold of the transport system.

The transport system of the cable in water type according to the invention is simple to make and can be assembled and dismantled simply and easily by an operator.

Further, owing to the invention a swimming pool with a cable transport system is made available that enables bathers to be transported between one zone and another along a set path between opposite sides of the swimming pool.

The invention can be better understood and implemented with reference to the attached drawings that illustrate some embodiments thereof by way of non-limiting example, in which:
Figure 1 is a side view of a first embodiment of a transport system of the cable in water type according to the invention in a first installation mode installed near a stretch of water, this transport system comprising a first embodiment of a towing station, a first embodiment of a transit station and a first embodiment of a motion transmitting means;
Figure 2 is a top view of the water transport system of Figure 1 with some parts removed to show better motion transmitting means of the water transport system according to the invention;
Figure 3 is a view like that of Figure 2 in which elements have been removed to show a movement of the motion transmitting means of Figure 2;
Figure 4 is a side view of a portion of the water transport system of Figure 1 with some parts removed to show better height adjusting means of the water transport system according to the invention;
Figure 5 is a perspective view of the height adjusting means of Figure 4;
Figure 6 is a schematic side view of a water transport system according to the invention in a second installation mode;
Figure 7 is a schematic side view of a water transport system according to the invention in a third installation mode;
Figure 8 is a schematic side view of a water transport system according to the invention in a fourth installation mode;
Figure 9 is a schematic side view of a water transport system according to the invention in a fifth installation mode;
Figure 10 is a top view of a second embodiment of a motion transmitting means of the water transport system according to the invention;
Figure 11 is a perspective view of a portion of the second embodiment of motion transmitting means of Figure 10;
Figure 12 is a side view of the portion of the second embodiment of motion transmitting means of Figure 11;
Figure 13 is a frontal view of the portion of the second embodiment of motion transmitting means of Figure 11;
Figure 14 is a side view of a second embodiment of a transit station of the motion transmitting means of the water transport system according to the invention;
Figure 15 is a side view of the second embodiment of a transit station of Figure 14 taken from a side opposite Figure 14;
Figure 16 is a perspective view of the second embodiment of a transit station of Figure 14;
Figure 17 is a top view of the second embodiment of a transit station of Figure 14;
Figure 18 is a schematic side view of a swimming pool provided with a water transport system according to the invention in a first mounting mode;
Figure 19 is a perspective view of a portion of the embodiment of a water transport system according to the invention provided in the swimming pool of Figure 18;
Figure 20 is a side view of the portion of the embodiment of a water transport system of Figure 19;
Figure 21 is a top view of the portion of the embodiment of a water transport system of Figure 19;
Figure 22 is a schematic side view of a swimming pool provided with an embodiment of a water transport system according to the invention in a second mounting mode;
Figure 23 is a perspective view of a portion of the embodiment of a water transport system according to the invention provided in the swimming pool of Figure 22;
Figure 24 is a side view of the portion of the embodiment of a water transport system of Figure 22;
Figure 25 is a top view of the portion of the embodiment of a water transport system of Figure 22.

With reference to the aforesaid Figures, identical elements of different embodiments have been indicated, for the sake of greater clarity and simplicity, by the same numbering. A water transport system according to the invention, arranged for supporting and towing at least one person and/or one object along a set path in water has been indicated overall with 1.

The transport system 1 is in particular a transport system of the cable type (or rope, or cord or belt type) and is so installed that the aforesaid path extends in water, in particular on the surface of the water, so that a person, for example a bather or a swimmer, can easily rest on or take hold of the transport system 1 to travel the aforesaid path, or a portion thereof, remaining at least partially immersed in water, as will be explained better below in the description.

The transport system 1 can be installed in different environments, for example in a sea or in a lake so as to act as an attraction and service for bathing resorts, or in a swimming pool, so as to act as a service for swimming courses, for assisted swimming, for treatment paths or also in a wellness centre so as to act as a service for treatment paths, for rehabilitation, for thalassotherapy, or also in a water fun fair so as to act as a support for bathers in paths between platforms equipped with attractions.

The transport system 1 is configured, in particular, for supporting children and/or beginners in order that they become familiar with the water and in order to facilitate learning to swim or to support the disabled, for example along treatment paths, or also to support the aged in order for the aged to obtain assisted movement in water or lastly in order to support the young and adults for relaxation, entertainment or along wellness and rehabilitation paths.

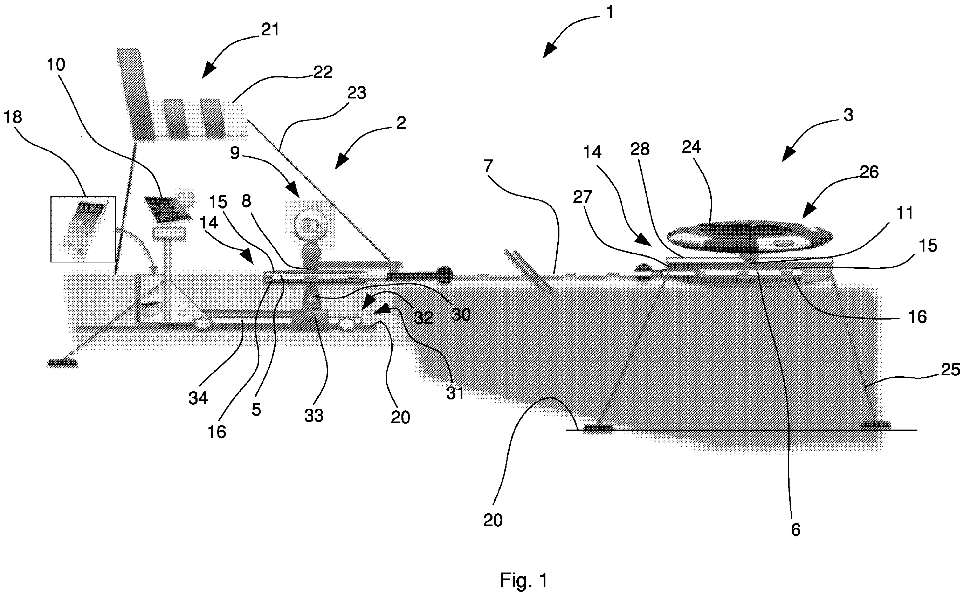

With reference in particular to Figures 1 to 5, the transport system 1 comprises a towing station 2 and a transit station 3, these stations being positioned at a distance from one another and being separated by a stretch of water. In use, a user, for example a bather, and/or an object can be towed along a set path P between the aforesaid towing station 2 and transit station 3, as will be explained better below in the description.

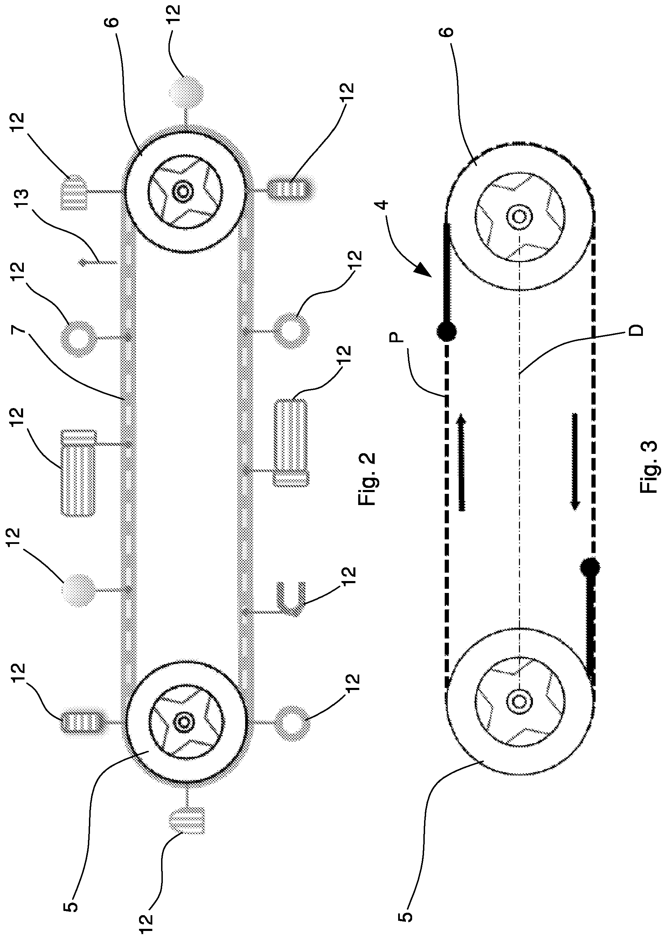

The transport system 1 further comprises motion transmitting means 4, shown in particular in Figure 3, arranged for enabling the user and/or the object to be towed along the set path P. The motion transmitting means 4 can comprise a drive pulley 5, mounted in the towing station 2, and a driven pulley 6, mounted in the transit station 3, the drive pulley 5 and the driven pulley 6 being connected by a motion transmitting flexible element 7 wound in a loop closed around respective outer peripheries of the drive pulley 5 and of the driven pulley 6. The motion transmitting flexible element 7 is arranged for transmitting a motion from the drive pulley 5 to the driven pulley 6.

The drive pulley 5 is splined on a drive shaft 8 which, rotated by drive means 9 comprising for example an electric motor, transmits, in use, the motion to the drive pulley 5, enabling the latter to rotate around an axis of the drive shaft 8.

The electric motor can comprise a sealed casing so as to prevent contaminating substances such as water, dust or sand being able to compromise the operation thereof.

The electric motor is suitably configured for being able to adjust the rotation speed of the drive pulley 5 and thus maintain a moderate and constant speed with a varying load of the transport system 1.

The electric motor can be powered by electric energy. For example, the electric motor can be connected to the electric grid, in particular when the towing station 2 is mounted on the ground, for example on the shore line or on a shore of a lake or a bank of a river as in the case of the embodiment of a transport system 1 illustrated in Figure 1. The electric motor can, alternatively, receive electric energy from a generator of electric energy that can be positioned in the ground or in water for example as it is provided on a towing station 2 floating in water.

Alternatively, the electric motor can be powered by solar power. In this case, the transport system 1 comprises one or more solar panels 10 and the electric motor comprises one or more batteries connected to said solar panels 10 so as to be able to be powered by the latter. The solar panels 10 are positioned on the towing station 2 or on modules, for example floating modules, positioned near, for example opposite, the towing station 2.

Still alternatively, the electric motor can be powered by wind power. In this case, the transport system 1 comprises one or more wind turbine blades.

The driven pulley 6 is splined on a driven shaft 11 and is free to rotate around an axis of the driven shaft 11 rotated by the motion transmitting flexible element 7 when the drive pulley 5 is rotated. In use, in fact, the drive pulley 5 drags the motion transmitting flexible element 7 by friction and the latter, again by friction, rotates the driven pulley 6.

The drive pulley 5 and the driven pulley 6 are separated by a distance D, shown in Figure 3, substantially corresponding to the distance between the axes respectively of the drive shaft 8 and of the driven shaft 11.

The motion transmitting flexible element 7 can be a cable, a rope, a cord, a belt, a timing belt or a similar flexible element that enables motion to be transmitted from the drive pulley 5, once rotation has been activated, to the driven pulley 6.

The motion transmitting flexible element 7 is arranged, in use on the surface of the water, to be grasped by a user directly or by using a floating device 12 connected to the motion transmitting flexible element 7.

The motion transmitting flexible element 7 defines the set path P in water, in particular a closed loop path, along which, or along a portion of which, the user can be towed between the towing station 2 and the transit station 3, when the user grasps the motion transmitting flexible element 7 or a floating device 12.

The motion transmitting flexible element 7 can also act only as a support for the user without the user having to be towed.

The motion transmitting flexible element 7 can comprise a core made of a material, for example cord, with high resistance and flexibility, and a cover that envelops said core and is made of a rubber mixture.

The motion transmitting flexible element 7 can be made so as to float in water.

The motion transmitting flexible element 7 comprises an outer surface that can be provided with a reflective material or to which one or more colours can be applied so as to be easily visible to a user.

Also, the outer surface of the motion transmitting flexible element 7 can be covered by, or the motion transmitting flexible element 7 can be made of, a material that enables the user to be easily gripped with a suitable grip.

The motion transmitting flexible element 7 can be made of a single piece.

Alternatively, the motion transmitting flexible element 7 can comprise a plurality of pieces, for example each of a length equal to about 10 metres, reciprocally connected by a joint.

The transport system 1 can comprise one or more hooking elements 13, each being arranged for being connected on one side to the motion transmitting flexible element 7 and on the other to a respective floating device 12. Hooking elements 13 consequently enable the respective floating devices 12 to be connected to the motion transmitting flexible element 7.

The hooking elements 13 can be positioned at a fixed distance along the motion transmitting flexible element 7. Alternatively, the distance between the hooking elements 13 can be variable, for example according to the dimensions of the floating device 12 that has to be fixed to the respective hooking elements 13.

Each hooking element 13 can comprise a fixture that is connectable to the motion transmitting flexible element 7 to which in turn a rope or a cord of limited length is connected to which a respective floating device 12 is secured.

The floating device 12 can be a life preserver, for example in the shape of a ring, a seat, a mattress, a platform or a boat.

The drive pulley 5 and the driven pulley 6 can comprise a respective race arranged for receiving the motion transmitting flexible element 7 and be shaped to prevent the latter being able to exit the respective seats provided in the drive pulley 5 and in the driven pulley 6.

In addition or alternatively to the races, it is possible to provide in the transport system 1 for the drive pulley 5 and the driven pulley 6 being housed in a respective container 14 in order to prevent the motion transmitting flexible element 7 exiting the respective seats provided in the drive pulley 5 and in the driven pulley 6.

Each container 14 can comprise an upper cover element 15 comprising a first half-shell, or cap, provided with a first peripheral edge that surrounds a first cavity, and a lower cover element 16 comprising a second half-shell, or cap, provided with a second peripheral edge that surrounds a second cavity, the first cavity and the second cavity defining a cavity inside the container 14 containing the drive pulley 5 or the driven pulley 6. The upper cover element 15 and the lower cover element 16 can be joined by an interlock connection. In the container 14, suitable openings 17 are obtained for the passage of the motion transmitting flexible element 7. In particular, each container 14 is provided with a respective inlet opening and with a respective outlet opening for the motion transmitting flexible element 7.

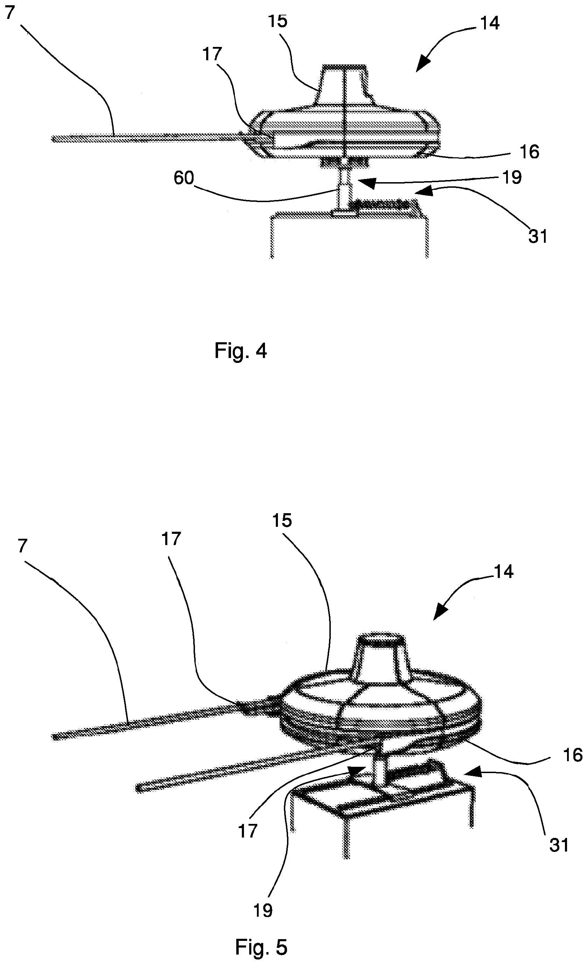

With reference in particular to Figures 4 and 5, an upper cover element 14 and a lower cover element 15 mounted on the drive pulley 5 of the towing station 2 are shown.

It should be noted that when the motion transmitting flexible element 7 is a timing belt, the latter maintains constant contact with the drive pulley 5 and with the driven pulley 6 positioned in the towing stations 2 and transit stations 3, thus overcoming the risk of the motion transmitting flexible element 7 slipping off the drive pulley 5 and the driven pulley 6. In this case, the containers 14 do not need to be provided and the drive pulley 5 and the driven pulley 6 can be devoid of races.

Each cover element 15, 16 can be divided into a plurality of sectors 50 configured for being mounted to form substantially a cap, for example by interlocking, as shown, for example in Figure 5. In this manner, an operation of mounting or dismantling and resting the transport system 1 is facilitated, because an operator does not have to handle large cover elements 15, 16.

Also, in order to prevent slipping off of the motion transmitting flexible element 7 outside the seat provided in the drive pulley 5 and in the driven pulley 6, the motion transmitting flexible element 7 can comprise a plurality of balls. A respective hooking element 13 can be connected to each ball.

The transport system 1 can further comprise a control and management device 18 arranged for controlling and managing remotely operation of the transport system 1. In particular, the control and management device 18 is configured for switching on and off the motion transmitting means 4 and for controlling the operation thereof.

The control and management device 18 can comprise a wireless module for receiving information from and commanding the motion transmitting means 4.

The control and management device 18 can be a Smartphone or a Tablet.

The control and management device 18 comprises interacting means arranged for enabling an operator to be able to interact therewith, for example to send instructions. The interacting means can comprise, for example, a display, in particular of touchscreen type, so that the operator can enter data into, or give instructions to, the control and management device 18.

The control and management device 18 comprises a processing unit, which is suitable for gathering and processing data coming from measuring means arranged in the transport system 1 and which convey information on the operating parameters of the transport system 1. In use, the processing unit commands the motion transmitting means 4 on the basis of the information received from the aforesaid signals. For example, the processing unit can report operating faults of the transport system 1 or arrest the motion transmitting means 4. The processing unit comprises electronic devices of known type, such as a microprocessor, memories and other electronic and circuitry components that are indispensable for the operation of the processing unit, such as for example oscillators or real time clocks or analogue/digital converters or the like that are not illustrated.

The measuring means comprises force sensors provided on the motion transmitting flexible element 7 in order to detect a value of a tension force of the motion transmitting flexible element 7. For example, the force sensors can be provided at the joints, when the motion transmitting flexible element 7 is made of more pieces. The force sensors, in use, convey, via wireless communication, information to the control and management device 18, i.e. measurements of the tension to which the motion transmitting flexible element 7 is subjected. The control and management device 18 processes the information received and compares it with a threshold force value range. If it detects that a tension safety threshold of the motion transmitting flexible element 7 has been exceeded, the control and management device 18 can command the arrest of the motion transmitting means 4 and, accordingly, of the transport system 1, or can disconnect the motion transmitting flexible element 7 from the seats provided in the drive pulley 5 and in the driven pulley 6.

The measuring means can further comprise one or more limit switch devices configured for detecting the presence of a user who grasps the motion transmitting flexible element 7 beyond a safety limit zone provided near the contact zone of the motion transmitting flexible element 7 with the external peripheries of the respective pulleys 5 and 6, in order to prevent the user possibly knocking against the container 14, if it is present, or a body of the pulleys 5 and 6 and possibly getting injured.

Each limit switch device can comprise a sensor element of electric type such as a presence sensor or a proximity sensor that is able to detect the presence of the user who reaches the safety limit zone. Alternatively, the presence of the user can be detected by a sensor element of mechanical or magnetic type.

The limit switch devices can be installed near inlet openings provided on the containers 14 of the drive pulley 5 and of the driven pulley 6.

In use, each limit switch device informs the control and management device 18 by wireless communication of the breaching of the safety limit zone by a bather grasping the motion transmitting flexible element 7. Following receipt of this information, the control and management device 18 can command the arrest of the drive means 9 and thus stop the movement of the motion transmitting flexible element 7.

In an alternative version, when the limit switch detects that the safety limit has been exceeded, the limit switch commands actuation of a stop, for example a bar, which prevents the user continuing transport along the path P and ensures that the user is disconnected from the motion transmitting flexible element 7 at the end of the stroke.

The transport system 1 can further comprise operation start means comprising, for example, a button, arranged for switching on and/or switching off manually the transport system 1 when an operator drives the operation start means, alternatively to using the control and management device 18.

The transport system 1 further comprises height adjusting means 19, shown in particular in Figures 4 and 5, configured for varying a height of the drive pulley 5 and/or of the driven pulley 6 with respect to respective installation surfaces 20 of the towing station 2 and of the transit station 3 such that the motion transmitting flexible element 7 is at a height corresponding to the surface of the water.

The height adjusting means 19 is shown in Figures 4 and 5 mounted on the towing station 2 to vary the height of the drive pulley 5, but corresponding height adjusting means 19 can be provided mounted on the transit station 3 to vary the height of the driven pulley 6.

The height adjusting means 19 can be of pneumatic or hydraulic type.

The height adjusting means 19 can comprise an actuator 60, in particular a linear actuator, connected to the shaft of a pulley 5, 6, for example to the driven shaft 11, to move the motion transmitting flexible element 7 on the basis of the water level. The linear actuator 60 can comprise a stem an end of which is connected to the shaft of said drive pulley 5 or of said driven pulley 6. In use, the stem is slidable inside a cylinder to move the drive pulley 5 or the driven pulley 6 to which it is connected to vary the height thereof.

The height adjusting means 19 comprises at least one level sensor, for example a presence sensor or a hydrometer, arranged for detecting the water level, in particular if the water level has gone outside a water level safety value range, i.e. if it has exceeded an upper threshold value or if it has fallen below a lower threshold value. The presence sensor or the hydrometer can be installed on the container 14 or on fixing means of the towing station 2 or of the transit station 3 on the installation surface 20, comprising, for example, at least one pillar or at least one tie rod, as will be explained better below in the description.

In use, the presence sensor or the hydrometer can inform the control and management device 18 by wireless communication whether the water level has gone outside the water level safety value range. Following receipt of this information, the control and management device 18 drives the height adjusting means 19 to adjust the height of the motion transmitting flexible element 7, by raising or lowering the drive pulley 5 and/or the driven pulley 6 acting on the operator cylinder, on the basis of a shift of the measured water level value from the extreme of the water level safety value range nearest the measured water level value.

In one embodiment, it is an operator who adjusts the height of the motion transmitting flexible element 7 by raising or lowering the drive pulley 5 and the driven pulley 6 by manual driving of the height adjusting means 19.

The height adjusting means 19 enables the height of the motion transmitting flexible element 7 to be adjusted by so maintaining the height of the motion transmitting flexible element 7 that the motion transmitting flexible element 7 is on the surface of the water also in the event of tides or when a bottom on which the towing station 2 or the transit station 3 is installed is subject to changes that may entail lowering of the installation surface 20. Owing to the height adjusting means 19, the body of the user who wishes to be attached to the motion transmitting flexible element 7 to be towed along the path P is totally immersed in water apart from the head, thus avoiding fluctuations in body temperature.

The transport system 1 can further comprise a protective cover 21, shown schematically in Figure 1, arranged for protecting the towing station 2 from solar radiation or from atmospheric phenomena. In particular, the protective cover 21 enables it to be avoided that the electric motor is exposed to direct sunlight and enables an operator who who has to perform maintenance tasks on the towing station 2, for example on the electric motor, to perform the maintenance tasks in the shade.

The protective cover 21 comprises a roof 22, for example made of synthetic material, and a plurality of fixing elements 23, arranged for making fixing of the roof 22 stable. The fixing elements 23 can be anchored to the towing station 2 and/or to the ground.

In one embodiment that is not illustrated in the Figures, a further protective cover is provided that is arranged for also protecting the transit station 3, that is completely similar to the protective cover 21 provided for the towing station 2.

The protective covers of the towing station 2 and of the transit station 3 further enable also the users of the transport system 1 to be protected from the sun and from the atmospheric phenomena.

The towing station 2 and the transit station 3 can be installed in different contexts.

In the first embodiment of a transport system 1 shown in Figure 1, the towing station 2 is positioned on and fixed to the ground, in particular on an edge of a sea or of a body of water and the transit station 3 is positioned and fixed in water, inside the sea or inside the stretch of water.

In one embodiment that is not illustrated, the towing station 2 is positioned and fixed in water whereas the transit station 3 is positioned and fixed on the ground. In another embodiment that is not illustrated, both the towing station 2 and the transit station 3 are positioned and fixed on the ground. In a further embodiment, both the towing station 2 and the transit station 3 are positioned and fixed in water.

The towing station 2 and/or the transit station 3 can comprise a body 26 arranged for housing components of which they are made, for example the respective drive pulleys 5 and driven pulleys 6, possibly provided with the respective containers 14.

The towing station 2 and/or the transit station 3 are positioned and fixed in water by the fixing means in various modes.

For example, the body 26 of the towing station 2 and/or of the transit station 3 can comprise a floating frame 24 arranged for enabling the towing station 2 and/or the transit station 3 to float on the water. When the transit station 3 is provided with the floating frame 24, the fixing means of the transit station 3 comprises a plurality of tie rods 25 arranged for anchoring the transit station 3 on the installation surface 20 that coincides with a bottom of the sea or of the body of water. In particular, the tie rods 25 enable elastic stabilization of the towing station 2 and/or of the transit station 3 on the respective installation surfaces 20 to be obtained.

In Figure 1, the transit station 3 is shown provided with the floating frame 24, which is however shown separated from the transit station 3 to be able to show more clearly some components of the transit station 3 and the path P of the motion transmitting flexible element 7. In use, the floating frame 24 is mounted so as to envelop and enclose the container 14.

When the towing station 2 or the transit station 3 is provided with the floating frame 24, and is thus able to float on the water, the floating frame 24 comprises a lower part 27, i.e. substantially the submerged part, or, in other words the part below the surface of the water, and an upper part 28, i.e. substantially the emerged part, or in other words the part above the surface of the water.

The lower part 27 can be made of stiff or semi-stiff material to act as a support for the pulleys 5, 6, or possibly the containers 14, and the motion transmitting flexible element 7, whereas the upper part 28 can be made of plastics, in particular rubbery plastics.

The upper part 28 of the transit station 3 can also be inflatable.

In one embodiment, the entire floating frame 24 is inflatable.

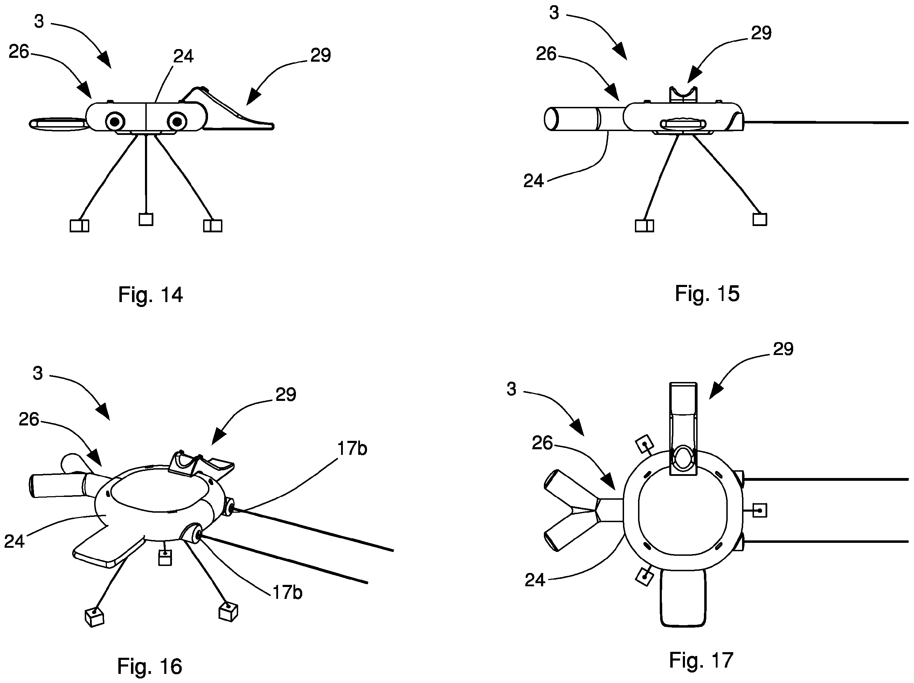

In Figures 14 to 17, a second embodiment is shown of the transit station 3 in which the floating frame 24 is provided with a climbing/alighting device 29, arranged for enabling a user to climb on or alight from the, upper part 28 of the transit station 3, for example to take a dive from the upper part 28 into water or to perform maintenance tasks on the transit station 3.

The climbing/alighting device 29 can be conformed as a ladder or a slide.

The climbing/alighting device 29 can be inflatable.

The floating frame 24 can be made as a single body.

In one embodiment that is not shown in the Figures, the towing station 2 can be provided with climbing/alighting devices that are similar to those disclosed previously with reference to the transit station 3.

In the first embodiment of a transport system 1 shown in Figure 1, according to a first installation mode, the transit station 3 floats in water and is fixed by the fixing means, which in this case comprises the tie rods 25, whereas the towing station 2 is fixed to the ground by the fixing means which, in this case, comprises a base 30 fixed to ground. The base 30 can also be provided for the transit station 3.

The transport system 1 can comprise distance adjusting means 31, configured for shifting the drive pulley 5 and/or the driven pulley 6 so as to maintain the distance D constant between the drive pulley 5 and the driven pulley 6, this in order to maintain correct tension of the motion transmitting flexible element 7. In use, in fact, the distance D could undergo variations, in particular when one of the two stations 2, 3 is floating. The distance adjusting means 31 can be mounted on the base 30.

The distance adjusting means 31 can comprise a slide 32 provided with a carriage 33 that is slidable on at least one pad 34 to be able to translate the base 30 and, thus, the towing station 2, along the at least one pad 34, varying the installation position of the towing station 2 and thus, the distance with respect to the transit station 3. The movement of the towing station 2 thus entails a variation of the distance D between the drive pulley 5 and the driven pulley 6.

Locking means is provided for locking sliding of the carriage 33 on the at least one pad 34 in order to fix the towing station 2 in position.

When a towing station 2 or a transit station 3 of the floating type is provided, i.e. they are provided with the floating frame 24, the transport system 1 can further comprise distance detecting means, arranged for measuring the distance between the two stations 2 and 3 and thus, indirectly the distance D between the drive pulleys 5 and driven pulleys 6, and driving on the towing station 2 or on the transit station 3 fixed to the ground the distance adjusting means 31 in order to maintain the distance D inside a set safety, or tolerance, distance value range.

Alternatively, the distance detecting means can report measurements of the detected distance to the control and management device 18 by wireless communication. The control and management device 18 processes the received information on the detected distance and compares the detected distance with a tolerance distance range of values. If the aforesaid distance measurement falls outside the tolerance distance range of values, the control and management device 18 drives the distance adjusting means 31 to move, following the result of the processing of the control and management device 18 (i.e. the measured shift), the carriage 33. In particular, the distance adjusting means 31 is driven to move the drive pulley 5 and/or the driven pulley 6 on the basis of a shift of the measured distance value from the extreme of the tolerance distance range of values nearest the measured distance value.

The distance detecting means can be installed on the body 26 or on the container 14 of one of the two towing 2 or transit 3 stations and can comprise, for example, a laser sensor.

The distance D can coincide with the distance detected by the distance detecting means or can be calculated by the distance detecting means or by the control and management device 18 on the basis of the assembly data, i.e. on the basis of the distances between the installation zone of the distance detecting means and the axes of the drive shaft 8 and of the driven shaft 11.

When the distance detecting means is not provided, the distance D can be varied on the basis of the detecting of the force sensors. In fact, when the control and management device 18, following receipt of the measurements detected by the force sensors, calculates that the value of the detected tension force of the motion transmitting flexible element 7 is outside the threshold value range for the tension of the motion transmitting flexible element 7, the control and management device 18 commands driving of the distance adjusting means 31, i.e. the movement of the carriage 33 on the basis of a shift of the measured force value from the extreme of the threshold tension force values range nearest the value of the measured tension force.

The distance adjusting means 31 can be provided additionally or alternatively also in the transit station 3, when the latter is non-floating.

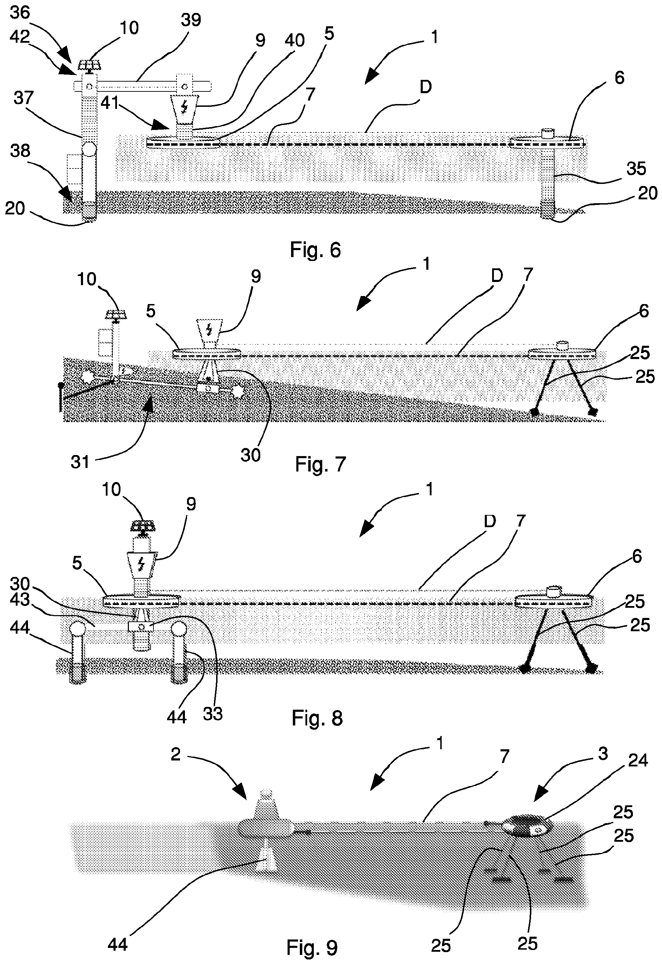

In the embodiment of a transport system 1 shown in Figure 6 according to a second installation mode, the transit station 3 is fixed in water by the fixing means which in this case comprises a pillar 35, whereas the towing station 2 is suspended on the water and fixed to the ground by the fixing means which, in this case, comprises a mechanical arm 36 fixed to the ground.

The mechanical arm 36 can comprise a first portion 37 comprising a first end 38 fixed to the ground and a second portion 39 hinged to the first portion 37. The first portion 37 extends substantially in height, i.e. away from the ground, whereas the second portion 39 is arranged for extending on the water. The mechanical arm 36 can further comprise an attachment 40 connected to the second portion 39 and extending from the latter to the surface of the water. The drive pulley 5 is connected to an end portion 41 of the attachment 40, the drive pulley 5 extending from the latter so that the motion transmitting flexible element 7 is arranged at the surface of the water.

The height adjusting means 19 arranged for adjusting a height of the drive pulley 5 with respect to the surface of the water can be provided in this embodiment in the first portion 37 and/or in the attachment 40 of the arm 36.

The height adjusting means 19 arranged for adjusting a height of the driven pulley 6 with respect to the surface of the water can be provided in this embodiment in the pillar 35.

The distance adjusting means 31 can be provided in this embodiment, in the second portion 39 of the arm 36. For example, the pad 34 can be mounted along a surface of the second portion 39, whereas the carriage 33 can be mounted to connect the attachment 40 to the pad 34. In other words, in this case the second portion 39 and the attachment 40 on which the distance adjusting means 31 is installed act as a slide 32.

The drive means 9 can be mounted in this embodiment on the attachment 40.

When the drive means 9 is powered by solar energy, the solar panel 10 (or the solar panels 10) can be installed near a second end 42 of the first portion 37.

In the embodiment of a transport system 1 shown in Figure 7 according to a third installation mode, the transit station 3 is floating on the surface of the water and is anchored in water to a bottom by the fixing means which in this case comprises the tie rods 25, whereas the towing station 2 is fixed to the ground on the installation surface 20 by the fixing means which, in this case, comprises the base 30 anchored to the distance adjusting means 31 which is in turn fixed to the ground on the installation surface 20. In this embodiment, the slide 32 is tilted substantially with the same tilt of the ground on which the slide 32 is installed.

In the embodiment of a transport system 1 shown in Figure 8 according to a fourth installation mode, the transit station 3 is floating on the surface of the water and is anchored in water by the fixing means which in this case comprises the tie rods 25, whereas the towing station 2 is fixed to the ground by the fixing means which, in this case, comprises a platform 43 anchored by one or more columns 44 to the ground.

The height adjusting means 19 arranged for adjusting a height of the drive pulley 5 with respect to the surface of the water can be provided in this embodiment in the column 44 (or in the columns 44).

The distance adjusting means 31 can be provided in this embodiment, in the platform 43. For example, the pad 34 can be mounted along a surface of the platform 43, whereas the carriage 33 can be mounted to connect the base 30 to the pad 34. In other words, in this case the platform 43 and the base 30 connected to the carriage 33 act as a slide 32.

In the embodiment of a transport system 1 shown in Figure 9 according to a fifth installation mode, the transit station 3 is floating on the surface of the water and is anchored in water by the fixing means which in this case comprises the tie rods 25, whereas the towing station 2 is fixed in water by the fixing means which, in this case, comprises a column 44.

It should be noted that other installation modes are possible that are not shown in the Figures and are different from those indicated above. In fact, for example, both the towing station 2 and the transit station 3 can be floating in water anchored with tie rods 25 to a bottom of the stretch of water or of the body of water. Also, both the towing station 2 and the transit station 3 can be positioned in water resting on columns 44 installed on the bottom of the body of water. Further, both the towing station 2 and the transit station 3 can be suspended in water, hanging on respective mechanical arms 36 installed on the ground, each on a respective edge or shore of a body of water, for example on opposite banks of a river. Also, both the towing station 2 and the transit station 3 can be positioned on the ground, each on a respective edge or shore of a body of water. Lastly, in alternative embodiments, the towing station 2 and transit station 3 have different installation modes from one another.

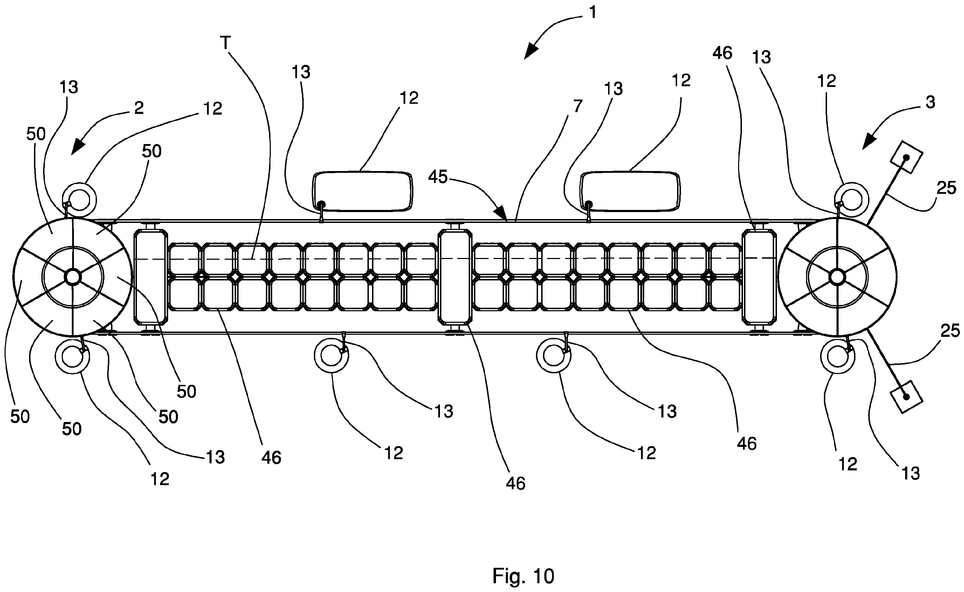

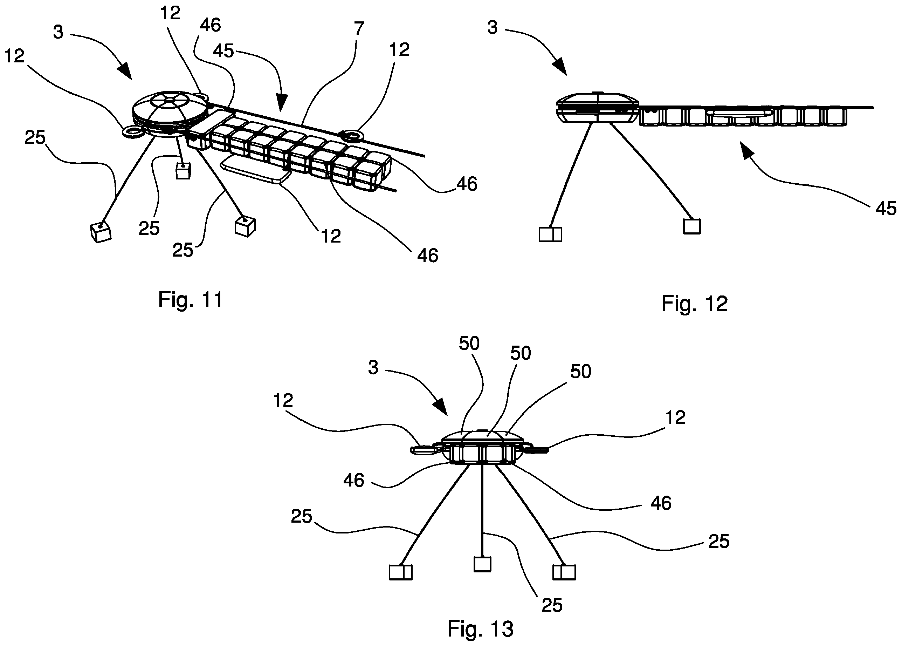

With reference in particular to Figures 10 to 13, a second embodiment is shown of motion transmitting means 4 provided in the transport system 1 according to the invention. In this embodiment, the motion transmitting means 4 comprises spacer means 45, arranged for fixing reciprocally said drive pulley 5 and said driven pulley 6 so as to maintain said distance D constant to ensure correct tension of said motion transmitting flexible element 7.

In particular, the spacer means 45 is provided when at least the towing station 2 or the transit station 3 is floating, i.e. provided with the floating frame 24.

The spacer means 45 can comprise a plurality of floating parallelpipedons 46 arranged alongside one another so as to cover entirely a portion T in water comprised between the drive pulley 5 and the driven pulley 6. Two of the floating parallelpipedons 46 at the ends of the portion T are fixed to a peripheral zone of the drive pulley 5 and of the driven pulley 6 or to a peripheral zone of the respective containers 14. The portion T has a length set on the basis of the distance D between the drive pulley 5 and the driven pulley 6 and the dimensions of the drive pulley 5 and of the driven pulley 6 or of the respective containers 14.

The floating parallelpipedons 46 can be made of a stiff material or can be made of an inflatable material.

It should be noted that when the stations are installed in a fixed manner, i.e. are not floating, the distance D remains fixed and, accordingly, it is possible that the distance adjusting means 31 is not provided.

When the portion T is very long, for example greater than 25 metres, the transport system 1 further comprises one or more intermediate stations, which are not shown in the

Figures, which are arranged for maintaining a suitable alignment and a suitable height of the motion transmitting flexible element 7 on the surface of the water. In this case, each intermediate station comprises wheels provided with respective seats on which the motion transmitting flexible element 7 rests, these wheels enabling the correct height of the motion transmitting flexible element 7 to be maintained, i.e. on the surface of the water.

Each intermediate station between the towing station 2 and the transit station 3 is completely similar to the transit station 3.

Accordingly, each intermediate station can comprise the limit switch devices, the protective cover 21 and/or all the other components disclosed previously with reference to the transit station 3.

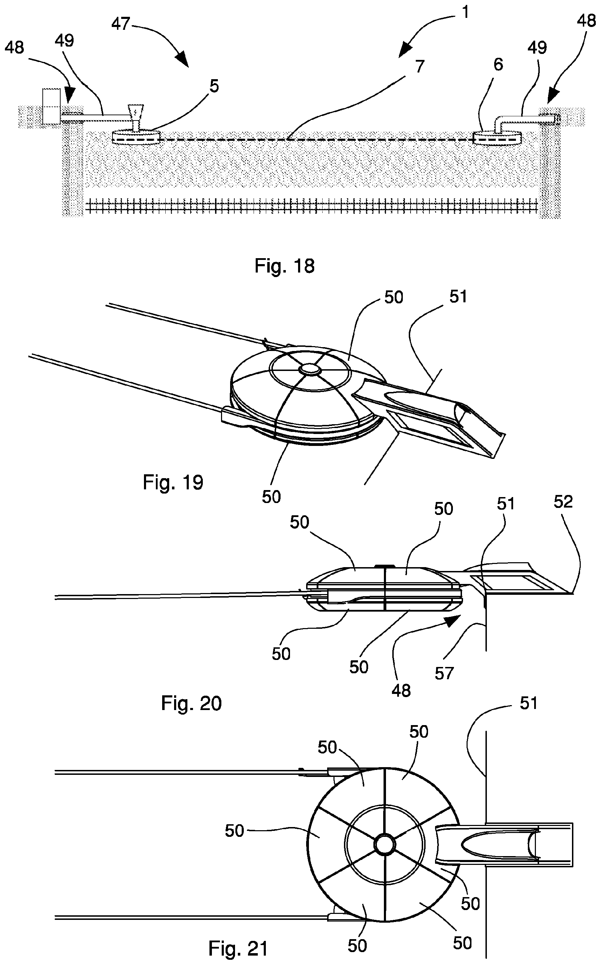

With reference to Figures 18 to 21, a swimming pool 47 provided with a transport system 1 according to the invention is shown in a first mounting mode.

The drive pulley 5 and the driven pulley 6 are mounted on respective opposite edges 48 of the swimming pool 47 by a respective support rod 49. The opposite edges 48 act as installation surfaces 20. In this case, the towing station 2 and the transit station 3 hang on the opposite edges 48 and the support rods 49 are so mounted that the motion transmitting flexible element 7 is positioned on the surface of the water.

With reference in particular to Figure 18, the support rods 49 are mounted inside the opposite edges 48 and protrude from a respective front surface 57 of the opposite edges 48.

With reference on the other hand to Figures 19 to 21, the support rods 49 are mounted at a respective corner 51 of the opposite edges 48 and make contact with both a respective front surface 57 and an upper surface 52 of the opposite edges 48.

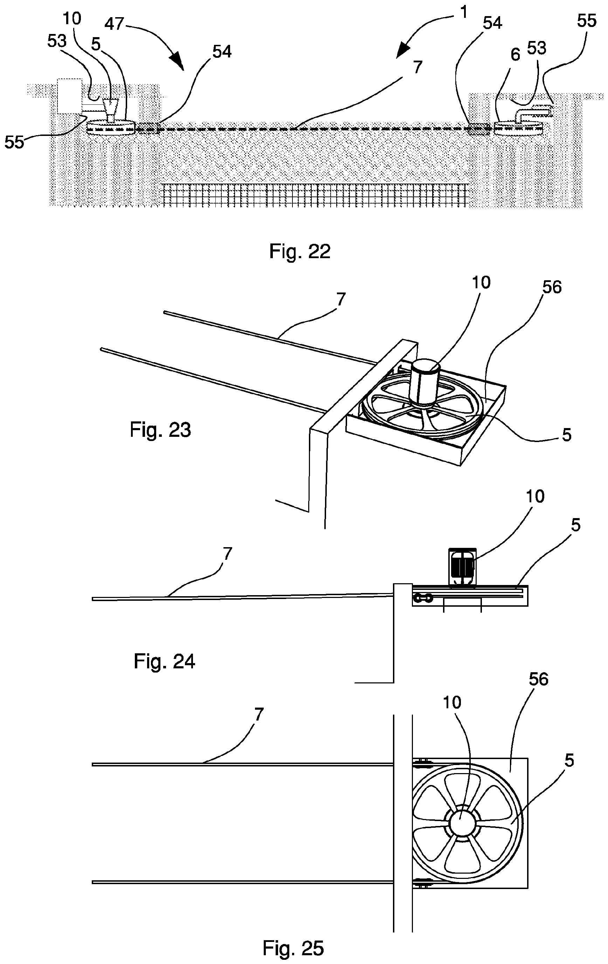

With reference to Figures 22 to 25, a swimming pool 47 provided with a transport system 1 according to the invention is shown in a second mounting mode.

In this case, each opposite edge 48 of the swimming pool 47 comprises a respective chamber 53 arranged for housing the drive pulley 5 and the driven pulley 6, respectively. In each opposite edge 48 through openings 54 are obtained that are arranged for the passage of the motion transmitting flexible element 7. In particular, the through openings 54 are so made that the motion transmitting flexible element 7 exits the front surfaces 57. Also in this case, the drive pulley 5 and the driven pulley 6 are so mounted that the motion transmitting flexible element 7 is positioned on the surface of the water.

With reference in particular to Figure 22, each chamber 53 comprises a respective inner surface 55 on which the support rods 49 are mounted, such that the pulleys 5 and 6, and thus the motion transmitting flexible element 7, are positioned on the surface of the water. Each inner surface 55 acts as an installation surface 20 for the respective station 2, 3.

In the embodiment shown in Figures 23 to 25, the support rods 49 are not provided. In this case, the drive shaft 8 of the drive pulley 5 and the driven shaft 11 of the driven pulley 6 are mounted, free to be able to rotate, on a respective bottom surface 56 comprised in each chamber 53. The drive shaft 8 of the drive pulley 5 and the driven shaft 11 of the driven pulley 6 are mounted on the respective bottom surface 56 such that the pulleys 5 and 6, and thus the motion transmitting flexible element 7, are positioned on the surface of the water. Each bottom surface 56 acts as an installation surface 20 for the respective station 2, 3.

An example of the operation of the transport system 1 according to the invention will be illustrated below.

When a user wishes to use the transport system 1 to be able to be transported along the path P, an operator turns on the transport system 1 by the operation start means or by the interacting means of the control and management device 18.

It is also possible for the transport system 1 to be started up when the user contacts the motion transmitting flexible element 7 or following traction of a hooking element 13 due to a user resting on a floating device 12.

If present, the measuring means and/or the limit switch device and/or the height adjusting means 19 and/or distance adjusting means 31, send, in particular in real time, signals conveying the values of the respective measurements detected thereby to the control and management device 18. The detected measurements are processed by the processing unit of the control and management device 18 from which it obtains information on the operation of the transport system 1. The aforesaid measurements are compared by the processing unit with respective threshold ranges and, following the detection of the deviations from said threshold ranges, the processing unit carries out corrective measures. For example, the processing unit can command the height adjusting means 19 to drive the operator cylinder to vary the height of the drive pulley 5 and/or of the driven pulley 6, in order to maintain the pulleys 5, 6 aligned and the motion transmitting flexible element 7 on the surface of the water.

The processing unit can switch off the transport system 1 by commanding the arrest of the drive means 9, for example when a measurement correlated to an exit of the motion transmitting flexible element 7 from the seats of the drive pulley 5 and/or of the driven pulley 6 is detected by the force sensors.

The processing unit can command the drive means 9 to enter low energy consumption standby mode, for example when a user does not rest on the motion transmitting flexible element 7 for a set period of time, for example about 10 minutes.

The control and management device 18 can comprise a database arranged for creating a history folder storing the measurements and possibly the actions taken by the control and management device 18 following processing of the measurements. This also permits periodic maintenance of the components of the transport system 1.

Owing to the transport system 1 according to the invention, a user can easily travel along the path P or a portion of said path P, for example to reach a zone off the shore line or edge of a body of water, by connecting to the motion transmitting flexible element 7 and being towed thereby when the drive pulley 5 is rotated. In this manner, the user does not have to use much energy to swim along the aforesaid path.

Further, the transport system 1 according to the invention is safe for users who use it because it has safety devices such as limit switches. Further, the operation thereof is monitored constantly by the control and management device 18 that gathers information coming from the measuring means and/or from the limit switch device and/or from the height adjusting means 19 and/or from the distance adjusting means 31.
The cable in water transport system 1 according to the invention is simple to make and is easily assemblable and dismantlable by an operator. For example, providing cover elements 15, 16 divided into a plurality of sectors 50 enables an operator not to have to handle items of large dimensions.

## Claims

1. Water transport system (1) for transporting a user and/or an object along a closed loop path (P), said water transport system (1) comprising:
- a towing station (2) and a transit station (3) arranged at a distance from one another and separated by a stretch of water;
- motion transmitting means (4) arranged for enabling said user and/or said object to be towed along said loop path (P), said motion transmitting means (4) being provided with:
- a drive pulley (5) arranged in said towing station (2) and splined on a drive shaft (8);
- a driven pulley (6) arranged in said transit station (3) and splined on a driven shaft (11), said drive pulley (5) and said driven pulley (6) being separated by a distance (D);
- a motion transmitting flexible element (7) wound in a loop around said drive pulley (5) and around said driven pulley (6) and defining said path (P);
- drive means (9) arranged for rotating said drive pulley (5) around an axis of said drive shaft (8) so as to drag by friction said motion transmitting flexible element (7) to move along said path (P), which in, turn, rotatingly drags said driven pulley (6);
- height adjusting means (19) configured for varying a height of said drive pulley (5) and/or of said driven pulley (6) with respect to respective installation surfaces (20) of said towing station (2) and of said transit station (3), such that said motion transmitting flexible element (7) is at a height corresponding to the surface of the water;
said water transport system (1) being **characterised in that** said height adjusting means (19) comprises an actuator (60) connected to said drive shaft (8) and/or to said driven shaft (11), said actuator (60) being provided with a stem, an end of which is connected to said drive shaft (8) and/or to said driven shaft (11) and is slidable inside a cylinder to move the height of said drive pulley (5) and/or said driven pulley (6) to which it is connected to vary a height thereof on the basis of a water level.

2. Water transport system (1) according to claim 1, wherein said height adjusting means (19) further comprises a level sensor arranged for detecting whether the water level has exceeded a water level safety value range, i.e. whether it has exceeded an upper threshold value of said water level safety value range or whether it has fallen below a lower threshold value of said water level safety value range, said height adjusting means (19) being driven to raise or lower said drive pulley (5) and/or said driven pulley (6) on the basis of a deviation in the measured water level value from the extreme of said water level safety value range nearest the measured water level value.

3. Water transport system (1) according to claim 2, wherein said level sensor is installed on a container (14) of said drive pulley (5) and/or of said driven pulley (6) or on respective fixing means arranged for fixing said towing station (2) and said transit station (3) to said respective installation surfaces (20).

4. Water transport system (1) according to any one of the preceding claims, and further comprising distance adjusting means (31) configured for shifting said drive pulley (5) and/or said driven pulley (6) so as to maintain said distance (D) constant to ensure correct tension of said motion transmitting flexible element (7).

5. Water transport system (1) according to claim 4, wherein said distance adjusting means (31) comprises a slide (32) provided with a carriage (33) that is slidable on at least one pad (34), said carriage (33) being connected to a base (30) of said towing station (2) and/or of said transit station (3) to be able to translate said base (30) and, thus, said towing station (2) and/or said transit station (3) along said at least one pad (34).

6. Water transport system (1) according to claim 5, wherein said distance adjusting means (31) further comprises locking means arranged for locking sliding of said carriage (33) on said at least one pad (34) to fix in position said towing station (2) and/or said transit station (3).

7. Water transport system (1) according to any one of claims 4 to 6, wherein said distance adjusting means (31) further comprises distance detecting means, arranged for measuring a distance between said towing station (2) and said transit station (3), said distance adjusting means (31) being driven to move said drive pulley (5) and/or said driven pulley (6) on the basis of a shift of said measured distance value from the extreme of a safety distance value range nearest the measured distance value.

8. Water transport system (1) according to any one of claims 1 to 3, and further comprising spacer means (45), arranged for fixing reciprocally said drive pulley (5) and said driven pulley (6) so as to maintain said distance (D) constant to ensure correct tension of said motion transmitting flexible element (7).

9. Water transport system (1) according to claim 8, wherein said spacer means (45) comprises a plurality of floating parallelpipedons (46) arranged alongside one another so as to cover entirely a portion (T) in water comprised between said drive pulley (5) and said driven pulley (6), two floating parallelpipedons (46) arranged at the ends of said portion (T) being fixed to a peripheral zone of said drive pulley (5) and/or of said driven pulley (6) or to a peripheral zone of a container (14) of said drive pulley (5) and/or of said driven pulley (6).

10. Water transport system (1) according to any one of the preceding claims, and further comprising a control and management device (18) arranged for controlling and managing remotely an operation of said water transport system (1).

11. Water transport system (1) according to claim 10, as claim 10 is appended to claim 2 or 3, or to claim 7, wherein said control and management device (18) comprises a wireless module for receiving information from, and commanding, said motion transmitting means (4), said control and management device (18) receiving from said level sensor and/or from said distance detecting means a measured water level value and/or a measured distance value of a distance between said towing station (2) and said transit station (3), comparing said measured water level value and/or said measured distance value respectively with a water level safety value range and/or a safety distance value range, and commanding said height adjusting means (19) and/or said distance adjusting means (31) respectively to raise or lower said drive pulley (5) and/or said driven pulley (6) or to shift said drive pulley (5) and/or said driven pulley (6) to vary said distance (D) on the basis of a shift of said measured water level value from the extreme of the water level safety value range nearest the measured water level value and/or on the basis of a shift of said distance value measured from the extreme of the safety distance value range nearest the measured distance value.

12. Swimming pool (47) comprising a water transport system (1) according to one or more of claims 1 to 11.

## Patentansprüche

1. Wassertransportsystem (1) zum Transportieren eines Benutzers und/oder eines Gegenstandes entlang eines Endlosschleifenpfads (P), wobei das Wassertransportsystem (1) aufweist:
- eine Schleppstation (2) und eine Transitstation (3), die in einer Entfernung voneinander angeordnet und durch eine Wasserstrecke getrennt sind;
- Bewegungsübertragungsmittel (4), die dazu angeordnet sind, es dem Benutzer und/oder dem Gegenstand zu ermöglichen, entlang des Endlosschleifenpfads (P) geschleppt zu werden, wobei die Bewegungsübertragungsmittel (4) versehen sind mit:
- einer Antriebsumlenkrolle (5), die in der Schleppstation (2) angeordnet und auf einer Antriebswelle (8) verkeilt ist;
- einer angetriebenen Umlenkrolle (6), die in der Transitstation (3) angeordnet und auf einer angetriebenen Welle (11) verkeilt ist, wobei die Antriebsumlenkrolle (5) und die angetriebene Umlenkrolle (6) um eine Entfernung (D) getrennt sind;
- einem flexiblen Bewegungsübertragungselement (7), das in einer Schleife um die Antriebsumlenkrolle (5) und um die angetriebene Umlenkrolle (6) gewunden ist und den Pfad (P) definiert;
- Antriebsmitteln (9), die dazu angeordnet sind, die Antriebsumlenkrolle (5) um eine Achse der Antriebswelle (8) zu drehen, um so das flexible Bewegungsübertragungselement (7) durch Reibung mitzunehmen, um sich entlang des Pfades (P) zu bewegen, das wiederum die angetriebene Umlenkrolle (6) drehend mitnimmt;
- Höheneinstellmittel (19), die dazu ausgebildet sind, eine Höhe der Antriebsumlenkrolle (5) und/oder der angetriebenen Umlenkrolle (6) bezüglich jeweiliger Installationsflächen (20) der Schleppstation (2) und der Transitstation (3) zu variieren, derart, dass das flexible Bewegungsübertragungselement (7) sich auf einer Höhe befindet, die der Wasseroberfläche entspricht;
wobei das Wassertransportsystem (1) **dadurch gekennzeichnet ist, dass** die Höheneinstellmittel (19) einen Aktuator (60) aufweisen, der mit der Antriebswelle (8) und/oder mit der angetriebenen Welle (11) verbunden ist, wobei der Aktuator (60) mit einem Schaft versehen ist, dessen eines Ende mit der Antriebswelle (8) und/oder der angetriebenen Welle (11) verbunden ist und innerhalb eines Zylinders verschiebbar ist, um die Höhe der Antriebsumlenkrolle (5) und/oder der angetriebenen Umlenkrolle (6), mit der er verbunden ist, zu bewegen, um eine Höhe derselben auf der Basis eines Wasserniveaus zu variieren.

2. Wassertransportsystem (1) nach Anspruch 1, wobei die Höheneinstellmittel (19) weiterhin einen Niveausensor aufweisen, der dazu angeordnet ist zu detektieren, ob das Wasserniveau einen Wasserniveau-Sicherheitswertebereich überschritten hat, d.h. ob es einen oberen Schwellenwert des Wasserniveau-Sicherheitswertebereiches überschritten hat, oder ob es unter einen unteren Schwellenwert des Wasserniveau-Sicherheitswertebereichs gefallen ist, wobei die Höheneinstellmittel (19) angetrieben werden, um die Antriebsumlenkrolle (5) und/oder die angetriebene Umlenkrolle (6) auf der Basis einer Abweichung des gemessenen Wasserniveauwerts von dem Extremum des Wasserniveau-Sicherheitswertebereichs, das dem gemessenen Wasserniveauwert am Nächsten kommt, anzuheben oder abzusenken.

3. Wassertransportsystem (1) nach Anspruch 2, wobei der Niveausensor an einem Behälter (14) der Antriebsumlenkrolle (5) und/oder der angetriebenen Umlenkrolle (6) oder an jeweiligen Festlegemitteln installiert ist, die zum Festlegen der Schleppstation (2) und der Transitstation (3) an den jeweiligen Installationsflächen (20) angeordnet sind.

4. Wassertransportsystem (1) nach irgendeinem der vorhergehenden Ansprüche und weiterhin mit Entfernungseinstellmitteln (31), die zum Verlagern der Antriebsumlenkrolle (5) und oder der angetriebenen Umlenkrolle (6) ausgebildet sind, um so die Entfernung (D) konstant zu halten, um eine korrekte Spannung des flexiblen Bewegungsübertragungselements (7) zu gewährleisten.

5. Wassertransportsystem (1) nach Anspruch 4, wobei die Entfernungseinstellmittel (31) einen Schieber (32) aufweisen, der mit einem Schlitten (33) versehen ist, der auf zumindest einer Konsole (34) verschiebbar ist, wobei der Schlitten (33) mit einer Basis (30) der Schleppstation (2) und/oder der Transitstation (3) verbunden ist, um die Basis (30) und somit die Schleppstation (2) und/oder die Transitstation (3) entlang der zumindest einen Konsole (34) zu versetzen.

6. Wassertransportsystem (1) nach Anspruch 5, wobei die Entfernungseinstellmittel (31) weiterhin Verriegelungsmittel aufweisen, die zum Verriegeln der Verschiebung des Schlittens (33) auf der zumindest einen Konsole (34) angeordnet sind, um die Schleppstation (2) und/oder die Transitstation (3) in Position festzulegen.

7. Wassertransportsystem (1) nach irgendeinem der Ansprüche 4 bis 6, wobei die Entfernungseinstellmittel (31) weiterhin Entfernungsdetektiermittel aufweisen, die zum Messen einer Entfernung zwischen der Schleppstation (2) und der Transitstation (3) angeordnet sind, wobei die Entfernungseinstellmittel (31) angetrieben werden, um die Antriebsumlenkrolle (5) und/oder die angetriebene Umlenkrolle (6) auf der Basis einer Verlagerung des gemessenen Entfernungswerts von dem Extremum eines Sicherheitsentfernungswertebereichs, das dem gemessenen Entfernungswert am Nächsten kommt, zu bewegen.

8. Wassertransportsystem (1) nach irgendeinem der Ansprüche 1 bis 3, und weiterhin mit Abstandshaltermitteln (45), die zum gegenseitigen Festlegen der Antriebsumlenkrolle (5) und der angetriebenen Umlenkrolle (6) angeordnet sind, um so die Entfernung (D) konstant zu halten, um eine korrekte Spannung des flexiblen Bewegungsübertragungselements (7) zu gewährleisten.

9. Wassertransportsystem (1) nach Anspruch 8, wobei die Abstandshaltermittel (45) eine Mehrzahl an schwimmenden Parallelepipedons (46) aufweisen, die längsseits zueinander angeordnet sind, um so einen Abschnitt (T) im Wasser vollständig zu bedecken, das zwischen der Antriebsumlenkrolle (5) und der angetriebenen Umlenkrolle (6) enthalten ist, wobei die schwimmenden Parallelepipedons (46), die an den Enden dieses Abschnittes (T) angeordnet sind, an einem peripheren Bereich der Antriebsumlenkrolle (5) und/oder der angetriebenen Umlenkrolle (6) oder einem peripheren Bereich eines Behälters (14) der Antriebsumlenkrolle (5) und/oder der angetriebenen Umlenkrolle (6) festgelegt sind.

10. Wassertransportsystem (1) nach irgendeinem der vorhergehenden Ansprüche, und weiterhin mit einer Steuerungs- und Verwaltungsvorrichtung (18), die zum Fernsteuern und -verwalten eines Betriebs des Wassertransportsystems (1) angeordnet sind.

11. Wassertransportsystem (1) nach Anspruch 10, soweit Anspruch 10 von Anspruch 2 oder 3 abhängig ist, oder nach Anspruch 7, wobei die Steuerungs- und Verwaltungsvorrichtung (18) ein drahtloses Modul zum Empfangen von Information von und Befehlen zu den Bewegungsübertragungsmitteln (4) aufweist, wobei die Steuerungs- und Verwaltungsvorrichtung (18) von dem Niveausensor und/oder von den Entfernungsdetektiermitteln einen gemessenen Wasserniveauwert und/oder einen gemessenen Entfernungswert einer Entfernung zwischen der Schleppstation (2) und der Transitstation (3) empfängt, den gemessenen Wasserniveauwert und/oder den gemessenen Entfernungswert mit einem Wasserniveau-Sicherheitswertebereich und/oder einem Sicherheitsentfernungswertebereich vergleicht und den Höheneinstellmitteln (19) und/oder den Entfernungseinstellmitteln (31) befiehlt, die Antriebsumlenkrolle (5) und/oder die angetriebene Umlenkrolle (6) anzuheben oder abzusenken, oder die Antriebsumlenkrolle (5) und/oder die angetriebene Umlenkrolle (6) zu verlagern, um die Entfernung (D) auf der Basis einer Verlagerung des gemessenen Wasserniveauwertes von dem Extremum des Wasserniveau-Sicherheitswertebereichs, das dem gemessenen Wasserniveauwert am Nächsten kommt, und/oder auf der Basis einer Verlagerung des gemessenen Entfernungswertes von dem Extremum des Sicherheitsentfernungswertebereichs, das dem gemessenen Entfernungswert am Nächsten kommt, zu variieren.

12. Schwimmbad (47) mit einem Wassertransportsystem (1) gemäß einem oder mehreren der Ansprüche 1 bis 11.

## Revendications

1. Système de transport dans l'eau (1) pour transporter un utilisateur et/ou un objet le long d'une trajectoire en boucle fermée (P), ledit système de transport dans l'eau (1) comprenant:
- une station de traction (2) et une station de transit (3) agencées à une distance l'une de l'autre et séparées par une étendue d'eau;
- des moyens de transmission de mouvement (4) agencés pour permettre audit utilisateur et/ou audit objet d'être tiré le long de ladite trajectoire en boucle fermée (P), lesdits moyens de transmission de mouvement (4) étant pourvus:
- d'une poulie d'entraînement (5) agencée dans la station de traction (2) et monté par cannelure sur un arbre d'entraînement (8);
- d'une poulie entraînée (6) agencée dans ladite station de transit (3) et montée par cannelure sur un arbre entraîné (11), ladite poulie d'entraînement (5) et ladite poulie entraînée (6) étant séparées par une distance (D);
- d'un élément flexible de transmission de mouvement (7) enroulé en boucle autour de ladite poulie d'entraînement (5) et autour de ladite poulie entraînée (6) et définissant ladite trajectoire (P);
- de moyens d'entraînement (9) agencés pour faire tourner ladite poulie d'entraînement (5) autour d'un axe dudit arbre d'entraînement (8) de manière à traîner par friction ledit élément flexible de transmission de mouvement (7) pour qu'il se déplace le long de ladite trajectoire (P), ce qui traîne en rotation ladite poulie entraînée (6);
- des moyens de réglage de hauteur (19) configurés pour varier une hauteur de ladite poulie d'entraînement (5) et/ou de ladite poulie entraînée (6) par rapport à des surfaces d'installation respectives (20) de ladite station de traction (2) et de ladite station de transit (3), de telle sorte que ledit élément flexible de transmission de mouvement (7) se trouve à une hauteur correspondant à la surface de l'eau;
ledit système de transport dans l'eau (1) étant **caractérisé en ce que** lesdits moyens de réglage de hauteur (19) comprennent un actionneur (60) relié audit arbre d'entraînement (8) et/ou audit arbre entraîné (11), ledit actionneur (60) étant pourvu d'une tige dont une extrémité est reliée audit arbre d'entraînement (8) et/ou audit arbre entraîné (11) et est apte à coulisser à l'intérieur d'un cylindre pour déplacer la hauteur de ladite poulie d'entraînement (5) et/ou de ladite poulie entraînée (6) à laquelle elle est reliée pour varier une hauteur de celles-ci sur la base d'un niveau d'eau.

2. Système de transport dans l'eau (1) selon la revendication 1, dans lequel lesdits moyens de réglage de hauteur (19) comprennent en outre un capteur de niveau agencé pour détecter si le niveau d'eau a dépassé une plage de valeurs de sécurité de niveau d'eau, c'est-à-dire s'il a dépassé une valeur seuil supérieure de ladite plage de valeurs de sécurité de niveau d'eau ou s'il a baissé au-dessous d'une valeur seuil inférieure de ladite plage de valeurs de sécurité de niveau d'eau, lesdits moyens de réglage de hauteur (19) étant entraînés pour soulever ou abaisser ladite poulie d'entraînement (5) et/ou ladite poulie entraînée (6) sur la base d'un écart de la valeur de niveau d'eau mesurée par rapport à l'extrême de ladite plage de valeurs de sécurité de niveau d'eau le plus proche de la valeur de niveau d'eau mesurée.

3. Système de transport dans l'eau (1) selon la revendication 2, dans lequel ledit capteur de niveau est installé sur un contenant (14) de ladite poulie d'entraînement (5) et/ou de ladite poulie entraînée (6) ou sur des moyens de fixation respectifs agencés pour fixer ladite station de traction (2) et ladite station de transit (3) auxdites surfaces d'installation respectives (20).

4. Système de transport dans l'eau (1) selon l'une quelconque des revendications précédentes, et comprenant en outre des moyens de réglage de distance (31) configurés pour déplacer ladite poulie d'entraînement (5) et/ou ladite poulie entraînée (6) de manière à maintenir ladite distance (D) constante afin d'assurer une tension correcte dudit élément flexible de transmission de mouvement (7).

5. Système de transport dans l'eau (1) selon la revendication 4, dans lequel lesdits moyens de réglage de distance (31) comprennent une glissière (32) pourvue d'un chariot (33) qui est apte à coulisser sur au moins un patin (34), ledit chariot (33) étant relié à une base (30) de ladite station de traction (2) et/ou de ladite station de transit (3) pour pouvoir soumettre à une translation ladite base (30) et, ainsi, ladite station de traction (2) et/ou ladite station de transit (3) le long dudit au moins un patin (34).

6. Système de transport dans l'eau (1) selon la revendication 5, dans lequel lesdits moyens de réglage de distance (31) comprennent en outre des moyens de verrouillage agencés pour verrouiller le coulissement dudit chariot (33) sur ledit au moins un patin (34) pour fixer en position ladite station de traction (2) et/ou ladite station de transit (3).

7. Système de transport dans l'eau (1) selon l'une quelconque des revendications 4 à 6, dans lequel lesdits moyens de réglage de distance (31) comprennent en outre des moyens de détection de distance, agencés pour mesurer une distance entre ladite station de traction (2) et ladite station de transit (3), lesdits moyens de réglage de distance (31) étant entraînés pour déplacer ladite poulie d'entraînement (5) et/ou ladite poulie entraînée (6) sur la base d'un déplacement de ladite valeur de distance mesurée par rapport à l'extrême d'une plage de valeurs de sécurité le plus proche de la valeur de niveau d'eau mesurée.

8. Système de transport dans l'eau (1) selon l'une quelconque des revendications 1 à 3, et comprenant en outre des moyens d'écartement (45), agencés pour fixer réciproquement ladite poulie d'entraînement (5) et ladite poulie entraînée (6) de manière à maintenir ladite distance (D) constante afin d'assurer une tension correcte dudit élément flexible de transmission de mouvement (7).

9. Système de transport dans l'eau (1) selon la revendication 8, dans lequel lesdits moyens d'écartement (45) comprennent une pluralité de parallélépipèdes flottants (46) agencés les uns le long des autres de manière à couvrir entièrement une partie (T) dans l'eau comprise entre ladite poulie d'entraînement (5) et ladite poulie entraînée (6), deux parallélépipèdes flottants (46) agencés aux extrémités de ladite partie (T) étant fixés à une zone périphérique de ladite poulie d'entraînement (5) et/ou de ladite poulie entraînée (6) ou à une zone périphérique d'un contenant (14) de ladite poulie d'entraînement (5) et/ou de ladite poulie entraînée (6).

10. Système de transport dans l'eau (1) selon l'une quelconque des revendications précédentes, et comprenant en outre un dispositif de commande et de gestion (18) agencé pour commander et gérer à distance un fonctionnement dudit système de transport dans l'eau (1).

11. Système de transport dans l'eau (1) selon la revendication 10, quand la revendication 10 est dépendante de la revendication 2 ou 3, ou la revendication 7, dans lequel dans lequel le dispositif de commande et de gestion (18) comprend un module sans fil pour recevoir des informations provenant desdits moyens de transmission de mouvement (4) et donnant des ordres à ceux-ci, ledit dispositif de commande et de gestion (18) recevant dudit capteur de niveau et/ou desdits moyens de détection de distance une valeur de niveau d'eau mesurée et/ou une valeur de distance mesurée d'une distance entre ladite station de traction (2) et ladite station de transit (3), comparant ladite valeur de niveau d'eau mesurée et/ou ladite valeur de distance mesurée respectivement à une plage de valeurs de sécurité de niveau d'eau et/ou à une plage de valeurs de distance de sécurité, et donnant pour ordre aux moyens de réglage de hauteur (19) et/ou auxdits moyens de réglage de distance (31) respectivement de soulever ou d'abaisser ladite poulie d'entraînement (5) et/ou ladite poulie entraînée (6) ou de déplacer ladite poulie d'entraînement (5) et/ou ladite poulie entraînée (6) pour varier ladite distance (D) sur la base d'un déplacement de ladite valeur de niveau d'eau mesurée par rapport à l'extrême de la plage de valeurs de sécurité de niveau d'eau le plus proche de la valeur de niveau d'eau mesurée et/ou sur la base d'un déplacement de ladite valeur de distance par rapport à l'extrême de la plage de valeurs de distance de sécurité le plus proche de la valeur de distance mesurée.

12. Piscine (47) comprenant un système de transport dans l'eau (1) selon l'une ou plusieurs des revendications 1 à 11.
